**Europäisches Patentamt**

**European Patent Office**

**Office européen des brevets**

(19)

(11) Veröffentlichungsnummer: **0 203 280**
A1

(12) # EUROPÄISCHE PATENTANMELDUNG

(21) Anmeldenummer: **86102909.8**

(22) Anmeldetag: **05.03.86**

(51) Int. Cl.⁴: **A 01 D 33/04,** A 01 D 33/02

---

(30) Priorität: **16.03.85 DE 3509640**

(43) Veröffentlichungstag der Anmeldung: **03.12.86**
**Patentblatt 86/49**

(84) Benannte Vertragsstaaten: **DE FR GB IT**

(71) Anmelder: **A.J. Tröster GmbH + Co KG,
Kaiserstrasse 9-11, D-6308 Butzbach (DE)**

(72) Erfinder: **Dreismann, Wilhelm, Diekstrasse 32,
D-4830 Gütersloh (DE)**

(74) Vertreter: **Schlagwein, Udo, Dipl.-Ing., Anwaltsbüro
Ruppert & Schlagwein Bahnhofsallee 11, D-6350 Bad
Nauheim (DE)**

---

(54) **Erntemaschine mit einem als Trennband ausgebildeten Querband.**

(57) Bei einer Erntemaschine wird das Erntegut von der Rückseite her auf ein als Trennband ausgebildetes Querband (9) aufgegeben. Zu diesem Zweck ist oberhalb des Querbandes (9) eine als Feinkrautband ausgebildete Umlenkeinrichtung (7) angeordnet. Ein Abweiser (10) leitet das Erntegut auf dem Querband (9) nach vorne hin ab, so daß es auf ein Verleseband (11) gelangen kann.

Ein Grobkrautband 5 umschlingt die Umlenkeinrichtung (7) und einen Endbereich des Querbandes (9) und ist dadurch in der Lage, Grobkraut unmittelbar nach dem Verlassen des vorgeschalteten Siebbandes (2) vom Erntegut abzutrennen.

EP 0 203 280 A1

- 1 -

P 35 09 640.3-23

BEZEICHNUNG GEÄNDERT
Siehe Titelseite

A.J. Tröster GmbH & Co KG                    6308 Butzbach

Erntemaschine

Die Erfindung bezieht sich auf eine Erntemaschine, insbesondere Kartoffelvollerntemaschine, bei der das Erntegut
über ein Siebband einem als Trennband ausgebildeten Querband zugeführt wird und bei der eine Umlenkeinrichtung
sowie oberhalb des Querbandes ein schräg angeordneter Abweiser zum Ableiten des Erntegutes vom Querband auf ein
Verleseband vorgesehen sind. Eine solche Erntemaschine
ist in dem DE-GM 84 15 874 beschrieben.

Bei der bekannten Erntemaschine wird das Erntegut vom
Siebband auf die Vorderseite des Querbandes abgeworfen.
Die in der Figur 4 des Gebrauchsmusters dargestellte Umlenkeinrichtung dient dazu, vom Querband abgeleitete
Kartoffeln zusätzlich zu reinigen und dann dem Verleseband zuzuführen. Das Querband ist bei dieser Erntemaschine als Gumminoppenband ausgebildet, welches in der
Lage ist, Kluten und Steine mehr festzuhalten, als auf
ihm liegende Kartoffeln. Deshalb rollen die Kartoffeln
weiter zur rückwärtigen Querbandseite als die Kluten und
Steine. Würden die Kartoffeln mittels eines Abweisers
nach vorn hin abgeleitet, wie es bei Kartoffelerntemaschinen nomalerweise üblich ist, dann müßten sie sich
über die Kluten und Steine hinweg bewegen. Das ist nachteilig, weil dadurch Beimengungen mit auf das Verleseband gelangen können. Außerdem müssen die Kartoffeln
unnötig weit auf dem Querband seitlich verschoben werden, wodurch sie Schaden nehmen können. Zur Vermeidung

...

dieser Nachteile wird bei der Erntemaschine nach dem genannten Gebrauchsmuster G 84 15 874 das Erntegut vom Querband nach hinten abgewiesen. Man kann dann den Trenneffekt beim Beschicken des Querbandes aufgrund des im Vergleich zu Kluten und Steinen besseren Rollvermögens der Kartoffeln nutzen und die Kartoffeln dort ableiten, wo sie sich bevorzugt ansammeln. Nachteilig bei dieser Erntemaschine ist es jedoch, daß das Verleseband unter das Querband hindurch bis hinter das Querband geführt werden muß, damit es die an der rückwärtigen Seite des Querbandes abgeleiteten Kartoffeln aufnehmen kann. Es muß dann unerwünscht lang und tief, besonders steil oder gar abgeknickt verlaufen. Außerdem können auch hier Krautreste direkt auf das Querband gelangen, zumal bei dieser Erntemaschine besondere Rückhalteeinrichtungen montiert sind, die eventuell anhängende Kartoffeln vom Kraut lösen und dabei verstärkt auch Kraut auf das Querband fällt.

Ein weiterer Nachteil der vorbekannten Erntemaschine besteht darin, daß von einem das Siebband und das Querband umschließenden Grobkrautband Krautreste auf das Querband gelangen können und zwar über die gesamte Breite des Querbandes. Dabei kommt durch die Trägheit des Krautes, insbesondere bei trockenem Kraut, dieses meist auf den Kartoffeln zu liegen und läßt sich dann nur schwer abtrennen. Außerdem wird die Trennleistung erheblich beeinflußt.

Zur Vermeidung dieser Nachteile ist durch die DE-AS 1 296 864 auch schon eine Kartoffelerntemaschine bekannt, bei der die Kartoffeln durch ein Grobkrautband hindurch einem Querband zugeführt und am Kraut anhängende Kartoffeln durch besondere Rückhalteeinrichtungen vom Kraut getrennt und über ein Feinkrautband dem Querband zugeführt werden. Das Querband wird im wesentlichen von vorn beschickt, insbesondere mit Steinen und Kluten.

...

- 3 -

Nur am Kraut anhängende oder verwickelte Kartoffeln gelangen über das Feinkrautband von hinten auf das Querband. Auch bei dieser Erntemaschine können Krautreste
über die gesamte Breite auf das Querband gelangen.

Über die Gestaltung des Querbandes und insbesondere über
die Art und Weise der Abtrennung von Kluten und Steinen
ist in der genannten Schrift nichts gesagt. Von den auf
dem Markt befindlichen Maschinen der Inhaberin der DE-AS
1 296 864 weiß der Fachmann, daß das Querband das Erntegut lediglich zu einem Hubrad fördert und die Kluten-
und Steineabscheidung oberhalb eines Verlesebandes
mittels besonderer Vorrichtungen erfolgt.

Der Erfindung liegt die Aufgabe zugrunde, eine Erntemaschine der eingangs genannten Art derart auszubilden,
daß die bei der Beschickung eines Querbandes auftretende
Trennung von Erntegut und Beimengungen bei der Ableitung
des Erntegutes genutzt werden kann, ohne daß hierzu das
Erntegut unterhalb des Querbandes von seiner rückwärtigen Seite nach vorn gefördert werden muß.

Diese Aufgabe wird erfindungsgemäß dadurch gelöst, daß
die Umlenkeinrichtung oberhalb des Querbandes an seiner
bezogen auf die Fahrtrichtung rückwärtigen Längsseite
zur rückseitigen Querbandaufgabe vorgesehen ist.

Bei der erfindungsgemäßen Erntemaschine erfolgt die Querbandbeschickung statt von der Vorderseite des Querbandes, was bei den bisherigen, vergleichbaren Erntemaschinen üblich ist, von der Rückseite. Dadurch kann das Erntegut unter Ausnutzung des Trenneffektes bei der Querbandbeschickung nach vorn abgeleitet werden. Durch diese
bewährte Ableitung nach vorn ist es unnötig, das Verleseband unter das Querband hindurchzuführen, so daß  es
über nahezu seine gesamte Länge als Verleseband genutzt
werden kann.

...

Die Grobkrautabscheidung erfolgt besonders wirkungsvoll und zuverlässig, wenn ein Ende des Querbandes und die Umlenkeinrichtung von einem Grobkrautband umschlossen sind, durch welches hindurch das Erntegut vom Siebband zur Umlenkeinrichtung förderbar ist.

Eine andere, besonders vorteilhafte Ausgestaltung der Erfindung besteht darin, daß zwischen dem Obertrum und dem Untertrum des Grobkrautbandes ein das Erntegut zur Umlenkeinrichtung förderndes Förderband angeordnet ist. Durch dieses Förderband wird es möglich, das Querband so hoch anzuordnen, daß das Verleseband über seinen gesamten Bereich so hoch über den Boden verläuft, daß die Verlesepersonen möglichst wenig dem Staub und Schmutz ausgesetzt sind. Hiervon abgesehen gelangt durch das Grobkrautband durchfallendes Kraut statt auf das Querband auf dieses Förderband. Das Förderband schützt somit das Querband vor vom Grobkrautband fallendem Kraut.

Besonders einfach ist die Umlenkeinrichtung gestaltet, wenn sie eine Rutsche ist. Auch bei einer solchen Ausführungsform wird durch die seitliche Beschickung des Querbandes das unterschiedliche Rollvermögen von Kraut, Kluten, Steinen und Kartoffeln für eine Vortrennung genutzt. Die Krautreste bleiben am dichtesten bei der Rutsche liegen, dann folgen Kluten und Steine, während die Kartoffeln am weitesten nach vorn rollen.

Die Umlenkeinrichtung vermag jedoch zusätzlich zur Funktion der Umlenkung noch eine weitere Funktion zu erfüllen, nämlich Feinkraut abzuscheiden, wenn man sie genau wie die Umlenkeinrichtung gemäß der DE-AS 1 296 864 als Feinkrautband ausbildet. Man erreicht dann, daß das Querband vom Feinkraut freigehalten werden kann, was eine Trennung des Erntegutes von Kluten und Steinen begünstigt. Beim Querband kann man Zupfwalzen oder sonstige

...

- 5 -

Einrichtungen zum Abtrennen des Feinkrautes einsparen.

Den Effekt, daß bei seitlicher Beschickung des Querbandes Kartoffeln weiter rollen als Kluten und Steine, kann man besonders geschickt für die Beimengenabtrennung nutzen, wenn man gemäß einer anderen, vorteilhaften Ausgestaltung der Erfindung das Querband auf seiner Oberfläche im rückwärtigen Bereich als Klutentrenneinrichtung und im vorderen Bereich als Steintrenneinrichtung ausbildet.

Besonders einfach ist das Querband zur Erreichung dieses Zweckes gestaltet, wenn es im rückwärtigen Bereich durchmessergrößere Noppen hat als im vorderen Bereich und wenn der gegenseitige Abstand der Noppen im rückwärtigen Bereich größer ist als im vorderen Bereich.

Das im Vergleich zu Kluten oder Steinen bessere Rollvermögen der Kartoffeln auf dem Querband kann zur Steigerung des Trenneffektes gefördert werden, wenn das Querband um seine Längsachse geringfügig nach vorn gekippt ist. Bei einer solchen Ausführungsform kann man durch unterschiedliches Kippen des Querbandes unterschiedliche Hangneigungen ausgleichen.

Die Erfindung läßt zahlreiche Ausführungsformen zu. Zur weiteren Verdeutlichung ihres Grundprinzips ist eine davon in der Zeichnung dargestellt und wird nachfolgend beschrieben. Die Zeichnung zeigt in

Fig. 1 eine schematische Seitenansicht einer erfindungsgemäß gestalteten Erntemaschine,

...

Fig. 2    eine schematische Draufsicht auf die Erntemaschine gemäß Figur 1,

Fig. 3    einen Querschnitt durch das Obertrum eines
          Querbandes der Erntemaschine sowie einen
          oberhalb des Querbandes angeordneten Abweiser.

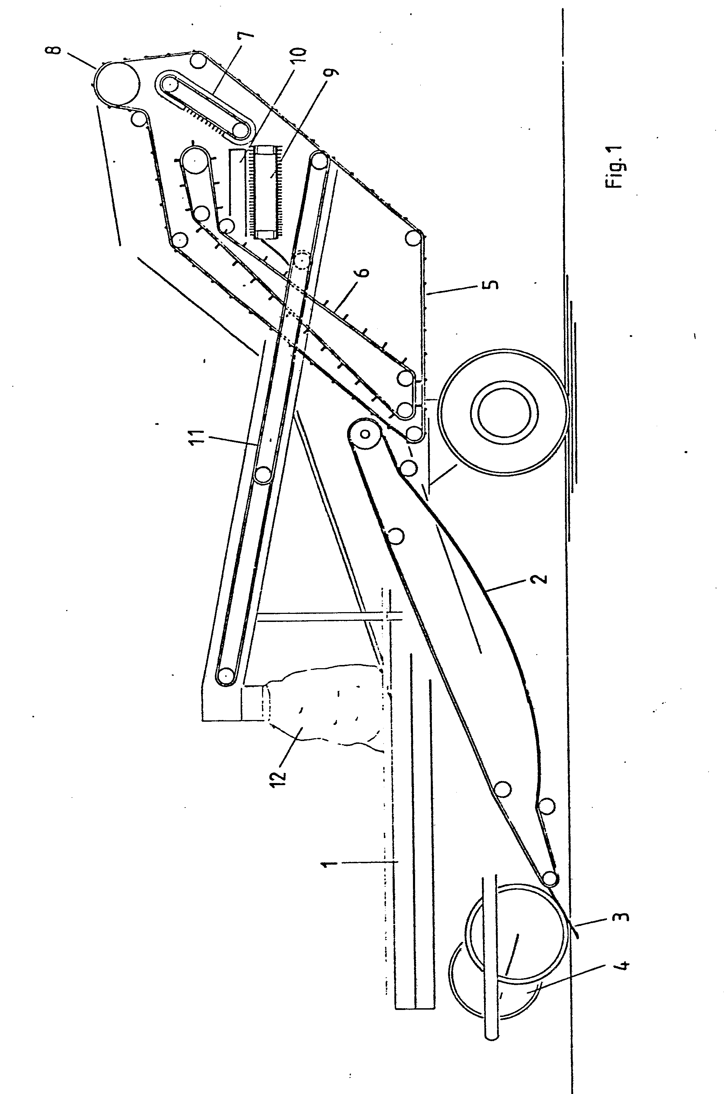

Die Figur 1 zeigt schematisch einen Maschinenrahmen 1,
der auf übliche, nicht dargestellte Weise an seiner
rechten Seite ein Siebband 2 haltert. Ein Schar 3 läßt
das Erntegut aus dem Boden auf das Siebband 2 gelangen,
wobei die Eindringtiefe des Schars 3 in den Boden durch
eine Tiefenführungsrolle 4 festgelegt ist. Bei diesem
Ausführungsbeispiel handelt es sich um eine Kartoffelvollerntemaschine mit Seitenaufnahme.

Hinter dem rückwärtigen Ende des Siebbandes 2 ist ein
weitmaschiges Grobkrautband 5 angeordnet, welches ein
Förderband 6 und eine Umlenkeinrichtung 7 umschließt,
die als Feinkrautband ausgebildet ist. Das Erntegut
fällt hinter der Abwurfstelle des Siebbandes 2 durch das
Grobkrautband 5 hindurch auf das Förderband 6. Das Grobkraut bleibt im Grobkrautband 5 hängen und wird zu einer
rückwärtigen Abwurfstelle 8 der Erntemaschine gefördert.
Mittels des Förderbandes 6 gelangt das noch mit Beimengungen versehene Erntegut unterhalb des oberen Trums des
Grobkrautbandes bis oberhalb eines Querbands 9 und wird
dann gegen die Umlenkeinrichtung 7 abgeworfen. Diese
hält das Feinkraut fest und fördert es zur rückwärtigen
Seite der Erntemaschine, wo es abgeworfen wird. Das Erntegut rollt auf der Umlenkeinrichtung 7 entgegen der
Bandlaufrichtung nach unten und gelangt von der rückwärtigen Längsseite des Querbandes 9 her auf das Querband
9.

Oberhalb des Querbandes 9 ist ein Abweiser 10 üblicher
Bauart, zum Beispiel ein rotierender Doppelabweiser
schräg angeordnet, durch den das Erntegut zur Vorderseite des Querbandes 9 hin abgeleitet wird und dadurch
auf ein Verleseband 11 fällt. Mittels des Verlesebandes
11 wird das nicht ausgelesene Erntegut in einen auf
einer Plattform stehenden Sack 12 oder einem nicht dargestellten Bunker gefördert.

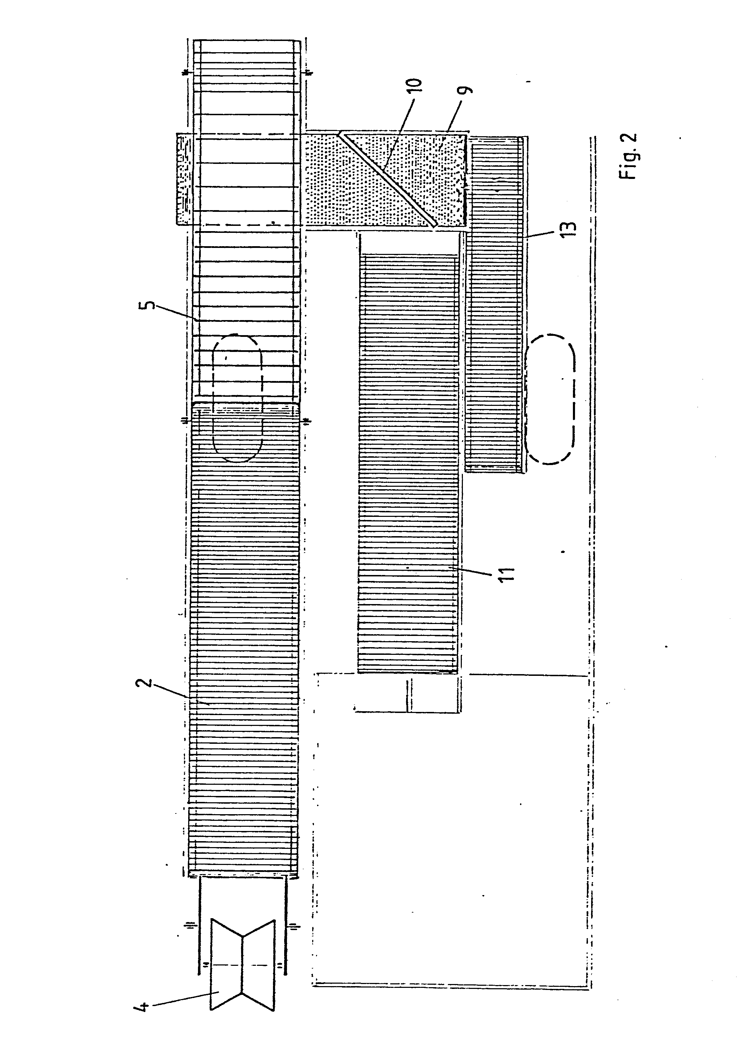

Die Figur 2 läßt in der Draufsicht erkennen, wie das
Querband 9 und das Verleseband 11 räumlich zueinander
angeordnet sind. Man erkennt insbesondere, daß der Abweiser 10 infolge seiner schrägen Anordnung in der Lage
ist, Erntegut nach vorn hin und damit zum Verleseband 11
hin abzuweisen. Steine und Kluten werden vom Querband 9
weiter zur Seite bis auf ein Beimengenabführband 13
transportiert.

Besonders wichtig für die Erfindung ist es, daß die in
Figur 1 dargestellte Unmlenkeinrichtung 7 an der rückwärtigen Seite des Querbandes 9 angeordnet ist und das
Erntegut auf dem Querband 9 nach vorn hin mittels des
Abweisers 10 abgeführt wird. Erntegut rollt auf dem Querband weiter als Krautreste, Kluten und Steine, so daß es
sich von vornherein näher an der Ableitseite befindet,
als die unerwünschten Beimengungen. Es braucht dann
nicht über die Beimengungen hinweg abgeleitet zu werden.

Die Trennwirkung auf dem Querband 9 kann gesteigert
werden, wenn dieses an der der Umlenkeinrichtung 7 zugewandten Seite zum Festhalten von Kluten und auf der anderen Seite zum Festhalten von Steinen ausgebildet ist.

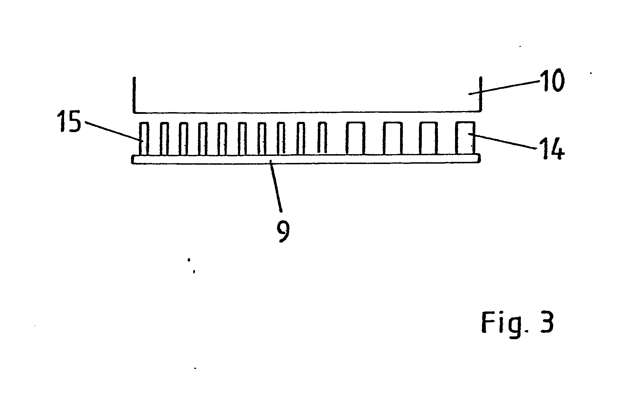

Die Figur 3 zeigt eine solche Gestaltung eines als Noppenbandes ausgebildeten Querbandes 9. Dieses Querband 9
hat auf dem der Umlenkeinrichtung 7 zugewandten Seite
Noppen 14, die einen größeren Durchmesser und einen
größeren gegenseitigen Abstand haben, als Noppen 15 auf

...

der anderen Seite. Als optimale Aufteilung hat sich ein
Bereich von einem Drittel der Breite für die durchmessergrößeren Noppen 14 und Zweidrittel der Querbandbreite
für die durchmesserkleineren Noppen 15 erwiesen. Oberhalb des Querbandes 9 ist in Figur 3 der Abweiser 10
dargestellt, der von üblicher Bauart sein kann, und im
Regelfall im vorderen Bereich als rotierende Bürste, im
hintern Bereich jedoch als Abstreifer ausgebildet ist.

<u>Auflistung der verwendeten Bezugszeichen</u>

1 Maschinenrahmen

2 Siebband

3 Schar

4 Tiefenführungsrolle

5 Grobkrautband


6 Förderband

7 Umlenkeinrichtung

8 Abwurfstelle

9 Querband

10 Abweiser


11 Verleseband

12 Sack

13 Beimengenabführband

14 Noppen

15 Noppen

P 35 09 640.3-23

Ansprüche

1. Erntemaschine, insbesondere Kartoffelvollerntema-schine, bei der das Erntegut über ein Siebband einem als Trennband ausgebildeten Querband zugeführt wird und bei der eine Umlenkeinrichtung sowie oberhalb des Querbandes ein schräg angeordneter Abweiser zum Ableiten des Erntegutes vom Querband auf ein Verleseband vorgesehen sind, dadurch gekennzeichnet, daß die Umlenkeinrichtung (7) oberhalb des Querbandes (9) an seiner bezogen auf die Fahrtrichtung rückwärtigen Längsseite zur rückseitigen Querbandaufgabe vorgesehen ist.

2. Erntemaschine nach Anspruch 1, dadurch gekennzeichnet, daß ein Ende des Querbandes (9) und die Umlenkeinrichtung (7) von einem Grobkrautband (5) umschlossen sind, durch welches hindurch das Erntegut vom Siebband (2) zur Umlenkeinrichtung (7) förderbar ist.

3. Erntemaschine nach Anspruch 1 oder einem der folgenden, dadurch gekennzeichnet, daß zwischen dem Obertrum und dem Untertrum des Grobkrautbandes (5) ein das Erntegut zur Umlenkeinrichtung (7) förderndes Förderband (6) angeordnet ist.

4. Erntemaschine nach Anspruch 1 oder einem der folgen-den, dadurch gekennzeichnet, daß die Umlenkeinrichtung (7) eine Rutsche ist.

5. Erntemaschine nach Anspruch 1 oder einem der folgen-den, dadurch gekennzeichnet, daß die Umlenkeinrichtung (7) ein Feinkrautband ist.

...

6. Erntemaschine nach Anspruch 1 oder einem der folgenden, dadurch gekennzeichnet, daß das Querband (9) auf seiner Oberfläche im rückwärtigen Bereich als Klutentrenneinrichtung und im vorderen Bereich als Steintrenneinrichtung ausgebildet ist.

7. Erntemaschine nach Anspruch 1 oder einem der folgenden, dadurch gekennzeichnet, daß das Querband (9) im rückwärtigen Bereich durchmessergrößere Noppen (15) hat als im vorderen Bereich und daß der gegenseitige Abstand der Noppen (14, 15) im rückwärtigen Bereich größer ist als im vorderen Bereich.

8. Erntemaschine nach Anspruch 1 oder einem der folgenden, dadurch gekennzeichnet, daß das Querband (9) um seine Längsachse geringfügig nach vorn gekippt ist.

Fig. 1

Fig. 2

10

15

14

9

Fig. 3

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-U-8 415 874 (MASCH. FABRIK NIEWÖHNER) * Figuren 1-4; Seite 3, Zeile 10 - Seite 4, Zeile 6; Anspruch 1 * | 1,2,4, 5 | A 01 D 33/04 A 01 D 33/02 |
| Y,D | DE-B-1 296 864 (VEB WEIMAR-WERK) * Figur 1; Anspruche 1,3; Spalte 2, Zeile 51 - Spalte 3, Zeile 17 * | 1,2,4, 5 | |
| Y | GB-A- 997 091 (SENIH GÜREL) * Figuren 10,11; Seite 3, Zeile 119 - Seite 4, Zeile 44 * | 1-4,8 | |
| Y | US-A-2 656 921 (GRAY et al.) * Figur 1; Spalte 4, Zeile 72 - Spalte 5, Zeile 4; Anspruch 1 * | 1-4,8 | RECHERCHIERTE SACHGEBIETE (Int. Cl.4) |
| A | DE-A-3 231 290 (NIEWÖHNER) * Figuren 6,7; Seite 8, Zeilen 17-28; Anspruch 14 * | 2,3 | A 01 D |
| A | DE-B-1 062 047 (H. LANZ AG) * Figuren 1,2; Spalte 3, Zeilen 33-70 * | 1,8 | |
| A | GB-A-2 016 957 (F.H. GRIMME) * Anspruche 1,2; Figur 1 * | 1,6,7 | |

--- -/-

Der vorliegende Recherchenbericht wurde für alle Patentansprüche erstellt.

| Recherchenort DEN HAAG | Abschlußdatum der Recherche 16-06-1986 | Prüfer MEINDERS H. |
|---|---|---|

0203280

**Europäisches Patentamt**

**EUROPÄISCHER RECHERCHENBERICHT**

EP 86 10 2909

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 582 228 (GUMMI-JÄGER KG) * Figuren 2,10,11; Ansprüche 1,2,10; Seite 5, Zeilen 8-15; Seite 7, Zeilen 17-26 * | 6,7 | |

-----

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 16-06-1986 | Prüfer MEINDERS H. |
|---|---|---|